# EUROPÄISCHE PATENTSCHRIFT

(11) **EP 3 159 419 B1**
(45) Veröffentlichungstag und Bekanntmachung des Hinweises auf die Patenterteilung: **12.12.2018**
(21) Anmeldenummer: 15190867.0
(22) Anmeldetag: 21.10.2015
(51) Int. Cl.: C21D 9/00, B21D 5/00, B21D 5/08, C21D 8/00

(54) **VERFAHREN ZUM ERZEUGEN ROLLGEFORMTER TEILGEHÄRTETER PROFILE**
METHOD OF FABRICATION OF ROLL FORMED PARTLY HARDENED PROFILES
PROCÉDÉ DE FABRICATION DES PROFILES LAMINÉS PARTIELLEMENT DURCIS

(43) Veröffentlichungstag der Anmeldung: 26.04.2017
(73) Patentinhaber: Voestalpine Krems Gmbh, 3500 Krems (AT)
(72) Erfinder: Seyr, Alfred, 3125 Statzendorf (AT); Rouet, Christian, 3494 Gedersdorf (AT)
(74) Vertreter: Patronus IP Patent- und Rechtsanwälte

(56) Entgegenhaltungen:
- EP-A1- 0 575 411
- WO-A1-2009/033527
- DE-A1-102007 024 797
- DE-A1-102010 035 195
- DE-A1-102011 107 561
- DE-C2- 10 120 063
- US-B2- 8 480 824

## Beschreibung

Die Erfindung betrifft ein Verfahren zum Erzeugen rollgeformter teilgehärteter Profile nach dem Oberbegriff des Anspruch 1.

Das Rollformen von Metallprofilen ist eine an sich bekannte Technik. Beim Rollprofilieren werden üblicherweise kontinuierlich ebene Blechbänder durch eine Mehrzahl von Rollengestellen geführt und dabei verformt bzw. umgeformt. Hierdurch können von einfachen zylindrischen Rohren bis hin zu komplexeren Rohrgeometrien eine Vielzahl von unterschiedlichen Querschnitten gefertigt werden.

Üblicherweise werden derartige Rohre dann im Stoßbereich längsgeschweißt, sodass geschlossene Strukturen entstehen. Aber auch die Herstellung von offenen Profilen wird häufig mittels Rollprofilierung durchgeführt.

Aus der EP 1 660 693 B1 ist ein Verfahren zum Herstellen eines gehärteten Profilbauteils aus einer härtbaren Stahllegierung mit kathodischem Korrosionsschutz bekannt, wobei ein mit einer Zink- oder Zinklegierungsbeschichtung versehenes Blechband rollprofiliert wird, das beschichtete Stahlblech anschließend auf eine zum Härten notwendige Austenitisierungstemperatur gebracht wird und dann so abgekühlt wird, dass es gehärtet wird, wobei der Profilstrang vor oder nach dem Härten in Profilstrangabschnitte abgelängt wird und vor dem Profilieren und Ablängen Löcher, Ausnehmungen, Stanzungen und dergleichen vorgenommen werden.

Die US 6,564,604 B2 hat zum Ziel Stahlbleche zur Verfügung zu stellen, welche anschließend einer Wärmebehandlung unterzogen werden, sowie ein Verfahren zur Herstellung von Teilen durch das Press-Härten dieser beschichteten Stahlbleche zur Verfügung zu stellen. Hierbei soll trotz der Temperaturerhöhung sichergestellt sein, dass das Stahlblech nicht entkohlt und die Oberfläche des Stahlbleches nicht vor, während und nach dem Heißpressen oder der Wärmebehandlung oxidiert. Hierfür soll eine legierte intermetallische Mischung auf die Oberfläche vor oder nach dem Stanzen aufgebracht werden, welche einen Schutz gegen Korrosion und Entkohlung leisten soll und zudem eine Schmierfunktion bieten kann. In einer Ausführungsform schlägt diese Druckschrift vor, eine übliche, offenbar elektrolytisch aufgebrachte Zinkschicht zu verwenden, wobei sich diese Zinkschicht mit dem Stahlsubstrat bei einem nachfolgenden Austenitisieren des Blechsubstrats in eine homogene Zn-Fe-Legierungsschicht umwandeln soll. Dieser homogene Schichtaufbau wird anhand von mikroskopischen Aufnahmen belegt. Im Gegensatz zu früheren Annahmen soll diese Beschichtung eine mechanische Widerstandskraft besitzen, die sie davor schützt, zu schmelzen. In der Praxis zeigt sich eine solche Wirkung jedoch nicht. Zusätzlich soll die Verwendung von Zink oder Zinklegierungen einen kathodischen Schutz der Kanten bieten, wenn Schnitte vorhanden sind. Bei dieser Ausführungsform ist jedoch von Nachteil, dass mit einer solchen Beschichtung - entgegen den Angaben in dieser Druckschrift - jedoch an den Kanten kaum ein kathodischer Korrosionsschutz und im Bereich der Blechfläche, bei Verletzungen der Schicht, nur ein schlechter Korrosionsschutz erzielt wird.

Im zweiten Beispiel der US 6,564,604 B2 wird eine Beschichtung angegeben, die zu 50% bis 55% aus Aluminium und 45% bis 50% aus Zink mit ggf. kleinen Mengen von Silizium besteht. Eine solche Beschichtung ist an sich nicht neu und unter dem Markennamen Galvalume® bekannt. Es wird angegeben, dass die Beschichtungsmetalle Zink und Aluminium mit Eisen eine homogene Zink-Aluminium-Eisen-Legierungsbeschichtung bilden soll. Bei dieser Beschichtung ist von Nachteil, dass hiermit ein ausreichender kathodischer Korrosionsschutz nicht mehr erreicht wird, bei der Anwendung im Presshärteverfahren jedoch der überwiegende Barriereschutz, der hiermit erreicht wird, nicht ausreicht, da teilbereichsweise Verletzungen der Oberfläche unvermeidlich sind. Zusammenfassend kann gesagt werden, dass das in dieser Druckschrift beschriebene Verfahren nicht in der Lage ist, das Problem zu lösen, dass im Allgemeinen kathodische Korrosionsbeschichtungen auf Basis von Zink nicht geeignet sind, Stahlbleche zu schützen, die nach der Beschichtung einer Wärmebehandlung ausgesetzt werden sollen und zudem möglicherweise einen weiteren Formgebung- bzw. Umformschritt unterworfen werden.

Aus der EP 1 013 785 A1 ist ein Verfahren zur Herstellung eines Blechbauteils bekannt, wobei das Blech auf der Oberfläche eine Aluminiumschicht oder eine Aluminiumlegierungsschicht besitzen soll. Ein mit derartigen Beschichtungen versehenes Blech soll einem Presshärteprozess unterzogen werden, wobei als mögliche Beschichtungslegierungen angegeben werden, eine Legierung mit 9-10% Silizium, 2-3,5% Eisen, Rest Aluminium mit Verunreinigungen und eine zweite Legierung mit 2-4% Eisen und der Rest Aluminium mit Verunreinigungen. Derartige Beschichtungen sind an sich bekannt und entsprechen der Beschichtung eines feueraluminierten Stahlblechs. Bei einer derartigen Beschichtung ist von Nachteil, dass hierdurch lediglich ein sogenannter Barriereschutz erreicht wird. In dem Moment, in dem eine solche Barriereschutzschicht verletzt ist oder bei Rissen in der Fe-Al-Schicht, wird das Grundmaterial, in diesem Fall der Stahl, angegriffen und korrodiert. Eine kathodische Schutzwirkung ist nicht vorhanden.

Ferner ist von Nachteil, dass auch eine solche feueraluminierte Beschichtung beim Aufheizen des Stahlblechs auf die Austenitisierungstemperatur und den anschließenden Presshärteschritts soweit chemisch und mechanisch beansprucht wird, dass das fertiggestellte Bauteil eine nicht ausreichende Korrosionsschutzschicht besitzt. Im Ergebnis kann somit festgehalten werden, dass eine derartige feueraluminierte Schicht für das Presshärten komplexer Geometrien, d.h. für das Erhitzen eines Stahlblechs auf eine Temperatur, die über der Austenitisierungstemperatur liegt, nicht gut geeignet ist.

Aus der DE 102 46 614 A1 ist ein Verfahren zur Herstellung eines beschichten Strukturbauteils für den Fahrzeugbau bekannt. Dieses Verfahren soll die Probleme der zuvor genannten europäischen Patentanmeldung 1 013 785 A1 lösen. Insbesondere wird angegeben, dass sich beim Tauchverfahren gemäß der europäischen Patentanmeldung 1 013 785 A eine intermetallische Phase bereits beim Beschichten des Stahls bilden würde, wobei diese Legierungsschicht zwischen dem Stahl und der eigentlichen Beschichtung hart und spröde sei und beim Kaltformen reißen würde. Hierdurch würden sich Mikrorisse bis zu einem Grad bilden, dass sich die Beschichtung selbst vom Grundwerkstoff ablöst und somit ihre Schutzfunktion verliert. Die DE 102 46 614 A1 schlägt daher vor, eine Beschichtung als Metall oder einer Metalllegierung mittels eines galvanischen Beschichtungsverfahrens in organischer, nicht wässriger Lösung aufzubringen, wobei ein besonders gut geeignetes und daher bevorzugtes Beschichtungsmaterial Aluminium oder eine Aluminiumlegierung sei. Alternativ würden sich auch Zink oder Zinklegierungen eignen. Ein derartiges beschichtetes Blech kann anschließend kalt vorgeformt und warm fertiggeformt werden. Bei diesem Verfahren ist jedoch von Nachteil, dass eine Aluminiumbeschichtung, auch wenn sie elektrolytisch aufgebracht wurde, bei einer Verletzung der Oberfläche des fertigen Bauteils keinen Korrosionsschutz mehr bietet, da die Schutzbarriere durchbrochen wurde. Bei einer elektrolytisch abgeschiedenen Zinkbeschichtung ist von Nachteil, dass beim Aufheizen für das Warmumformen das Zink zum großen Teil oxidiert und für einen kathodischen Schutz nicht mehr zur Verfügung steht. Unter Schutzgasatmosphäre dampft das Zink ab.

Aus der DE 101 20 063 C2 ist ein Verfahren zur Herstellung von metallischen Profilbauteilen für Kraftfahrzeuge bekannt. Bei diesem bekannten Verfahren zur Herstellung von metallischen Profilbauteilen für Kraftfahrzeuge wird in Bandform bereitgestelltes Ausgangsmaterial einer Walzprofiliereinheit zugeführt und zu einem Walzprofil umgeformt. Nach dem Austritt aus der Walzprofiliereinheit sollen zumindest partielle Bereiche des Walzprofils induktiv auf eine zum Härten erforderliche Temperatur erwärmt und anschließend in einer Abkühleinheit abgeschreckt werden. Im Anschluss hieran werden die Walzprofile zu den Profilbauteilen abgelängt. Ein besonderer Vorteil des Walzprofilierens soll in den niedrigen Fertigungskosten aufgrund der hohen Verarbeitungsgeschwindigkeit und der gegenüber einem Pressenwerkzeug geringen Werkzeugkosten zu sehen sein. Verwendet wird für das Profilbauteil ein bestimmter vergütbarer Stahl. Nach einer Alternative dieses Verfahrens können partielle Bereiche des Ausgangsmaterials auch vor dem Eintritt in Walzprofiliereinheit induktiv auf die zum Härten erforderliche Temperatur erwärmt und vor dem Ablängen des Walzprofils in einer Abkühleinheit abgeschreckt werden. Bei der zweiten Alternative ist von Nachteil, dass das Ablängen bereits im gehärteten Zustand erfolgen muss, was aufgrund der hohen Härte des Materials problematisch ist. Ferner ist von Nachteil, dass die im bereits beschriebenen Stand der Technik die abgelängten Profilbauteile gereinigt beziehungsweise entzundert werden müssen und nach der Entzunderung eine Korrosionsstückbeschichtung aufgebracht werden muss, wobei derartige Korrosionsstückbeschichtungen üblicherweise keinen sehr guten kathodischen Korrosionsschutz ergeben.

Aus der PCT/EP2008/006214 ist ebenfalls ein Verfahren zum Herstellen von gehärteten Profilbauteilen bekannt, wobei diese Profilbauteile rollgeformt werden und zum Zwecke des Härtens induktiv erhitzt werden. Um unterschiedliche Härten in unterschiedlichen Bereichen des Bauteils zu erzielen, wird hierbei in den Bereichen, die eine größere Härte besitzen sollen, eine Mehrzahl von Kanten oder Sicken erzeugt. Insbesondere werden Öffnungen in das Blech eingestanzt, z. B. auch mit einem Gittermuster ausgebildet, da bei der induktiven Erwärmungen die Bereiche, die am Rand von Öffnungen liegen oder Sicken begrenzen, also alle Formen von Kanten, stärker und schneller erhitzt werden, als ebene Blechbauteile. Somit wird quasi durch eine Materialschwächung eine größere Härte erzielt.

Bei allen bislang bekannten Verfahren ist es nicht möglich, eine Teilerwärmung eines solchen Bauteils und eine Teilhärtung so zu erzielen, dass sich das Bauteil nicht verzieht. Zumindest ist dies bislang im kontinuierlichen Prozess ausgeschlossen gewesen, sodass derartige Verfahren mit Rollprofilieranlagen nicht durchführbar waren oder nur anschließend bei bereits abgelängten Bauteilen.

Aufgabe der Erfindung ist es, ein Verfahren zu schaffen, mit dem kontinuierlich eine teilbereichsweise Härtung von rollprofilierten Bauteilen gelingt, ohne Inhomogenitäten oder Verzug zu schaffen.

Die Aufgabe wird mit einem Verfahren mit den Merkmalen des Anspruch 1 gelöst.

Vorteilhafte Weiterbildungen sind in den hiervon abhängigen Unteransprüchen gekennzeichnet.

Bei der Erfindung werden rollprofilierte Rohrprofile partiell austenitisiert und gehärtet, wobei partiell austenitisiert und gehärtet hierbei bedeutet, dass es nicht - wie bei herkömmlichen Verfahren -darum geht, die Profile über ihren gesamten Querschnitt und eine Teillänge des Profils über den Umfang gleichmäßig zu austenitisieren und zu härten, sondern nur in Teilumfangsbereichen des Rohrprofils, wobei diese Teilumfangsbereiche über die gesamte Länge des Profils reichen können, oder nur über Teillängen des Profils.

In herkömmlichen Rollprofilierungsanlagen gelingt eine solche Teilerwärmung und Teilhärtung nicht, da sich ein Verzug der Bauteile einstellt, der weder nach der Stärke noch nach der Lage wirklich eindeutig reproduzierbar auftritt.

Eine, bezogen auf die Umfangsrichtung eines rohrförmigen Strangs, nur teilbereichsweise bzw. segmentweise Erwärmung, auch nur über Teillängen, wird erfindungsgemäß dadurch herbeigeführt, dass ein kontinuierlich geförderter, zu einem Rohr gebogener Blechstrang
- mittels Induktoren auf eine Temperatur unter der Austenitisierungstemperatur vorerwärmt wird
- in den Bereichen, in denen eine Austenitisierung durchgeführt werden soll mit Brennern die Temperatur über die Austenitisierungstemperatur erhöht wird, wobei
- bei einer über die gesamte Länge eines geplanten Bauteils gewünschten Härtung die Brenner stationär auf den zu härtenden Bereich des vorbeigeführten Strang einwirken oder
- bei einer Erwärmung und Härtung über Teillängen die Brenner fliegend mitgeführt werden und lediglich die Bereiche erwärmen, die später gehärtet sein sollen.

Bei diesen unterschiedlichen Verfahrensweisen erfolgt nach der Austenitisierung auf jeden Fall eine Abschreckung, also sehr schnelle Kühlung, mit einer Geschwindigkeit, die über der kritischen Härtegeschwindigkeit liegt, sodass in den zu härtenden Bereichen ein zumindest teilmartensitisches Gefüge erzielt wird, wobei bei allen Verfahrensweisen, zumindest aber im Bereich der Austenitisierung, auf den Strang ein Zug ausgeübt wird, sodass der Strang im Bereich der Erwärmung eine gewisse geringfügige Dehnung erfährt, wobei die Dehnung insbesondere in den Bereichen stattfindet, die nicht über die Brenner erwärmt werden und sich dabei durch die Wärmedehnung ausdehnen.

Durch die Ausübung des Zugs auf den Strang, insbesondere die Ausübung des Zugs mittels Rollenpaaren auf den Strang an den Stellen, wo er nicht austenitisiert wird, wird somit die Wärmedehnung des Strangs im Bereich, in dem er austenitisiert wird, kompensiert. Diese Kompensation der Wärmedehnung führt dazu, dass diese Teile sich nicht verziehen.

Erfindungsgemäß werden notwendige Löcher oder Ausschnitte und auch das Ablängen nach dem Härten mittels Laser durchgeführt.

Notwendige Verprägungen in dem Strang werden mittels fliegender Prägeeinheiten durchgeführt, wodurch der Prozess ebenfalls gut kontinuierlich durchführbar ist.

Die Erfindung wird anhand einer Zeichnung beispielhaft erläutert.

Es zeigen dabei:
- Figur 1:: eine erfindungsgemäße Anlage zum Rollprofilieren mit integrierter Nachkonditionierung der Oberfläche;
- Figur 2:: ein mit der erfindungsgemäßen Anlage rollprofiliertes und teilgehärtetes Profil in schematischer geschnittener Ansicht;
- Figur 3a:: stark schematisiert eine Vorrichtung zum Rollprofilieren und Härten ohne Ausgleich der unterschiedlichen Längsausdehnung in den Bereichen unterschiedlicher Härte;
- Figur 3b:: stark schematisiert eine Vorrichtung zum Rollprofilieren und Härten mit Ausgleich der unterschiedlichen Längsausdehnung in den Bereichen unterschiedlicher Härte;

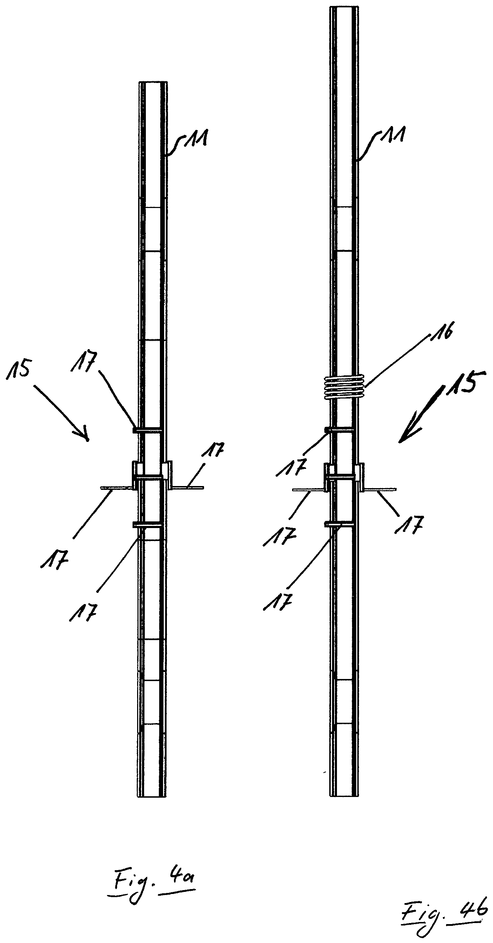

- Figur 4a:: die Anlage nach Figur 3a in einer Ansicht von unten;
- Figur 4b:: die Anlage nach Figur 3b in einer Ansicht von unten;

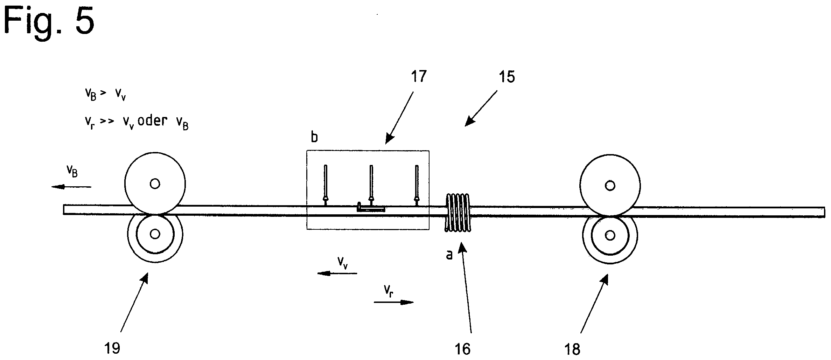

- Figur 5:: die erfindungsgemäße Vorrichtung nach Figur 3b in einer schematisierten Seitenansicht mit in Profillängsrichtung unterschiedlich harten Bereichen, wobei die Austenitisierungsstufe dem Profil mitgeführt wird während die Vorwärmstufe ruht;
- Figur 6a:: die Vorrichtung nach Figur 3a in einer weiteren Ansicht ohne Begrenzung der Temperaturdifferenz am Band, wobei die die daraus resultierende Verformung dargestellt ist;
- Figur 6b:: die Vorrichtung nach Figur 3b in einer weiteren Ansicht mit Induktor mit Begrenzung der Temperaturdifferenz am Band, wodurch das Profil (nahezu) verzugsfrei bleibt;
- Figur 7:: die gesteuerten Profilführungen für Führung des Bandes in der Erwärmungszone in den Bereichen mit Verprägung;
- Figur 8:: stark schematisiert die Anordnung nach Figur 7, welche an den verprägten Flanschen eines Profils angreift;
- Figur 9:: eine Draufsicht auf ein Profil in unterschiedlichen Förderstadien; und
- Figur 10:: die Anordnung nach Figur 9 zeigend die gesteuert offenen und geschlossenen Führungsrollenpaare abhängig vom verprägten Bereich.
- Figur 11:: eine erfindungsgemäße Anlage zum Rollprofilieren mit nachgeschaltener Nachkonditionierung der Oberfläche am einzelnen Bauteil;

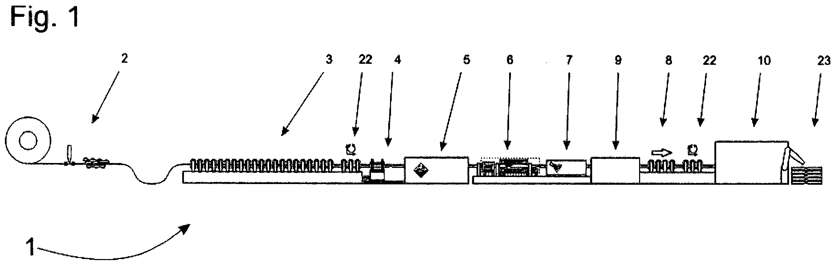

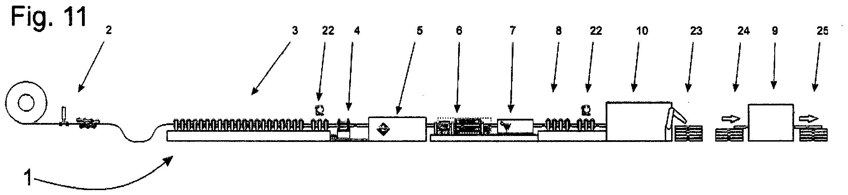

Zum Durchführen des Verfahrens ist eine Rollprofiliereinrichtung 1 vorgesehen (Fig. 1 und Fig. 11), wobei sich die Anlagen 1 in den Figuren 1 und 11 nur durch die Position der Nachkonditionierung der Oberfläche unterscheiden. Demnach umfasst die Rollprofiliereinrichtung 1 eine Bandvorbereitung 2, in der Stahlband einer geeigneten Breite von einer Spule (Coil) abgehaspelt und in die kontinuierliche Förderung der Anlage 1 eingespeist wird.

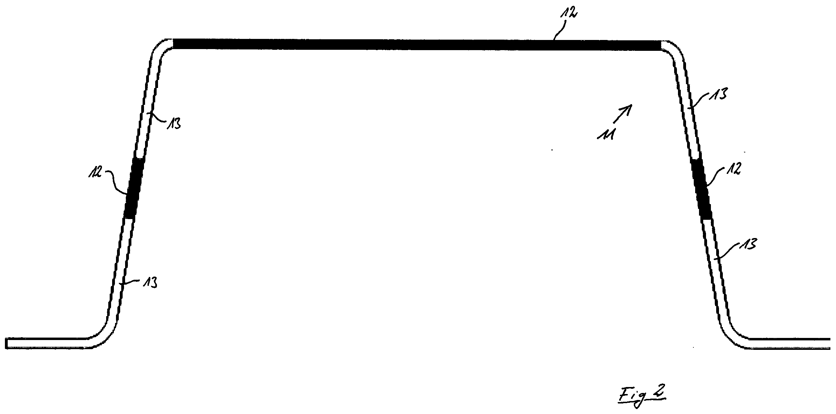

Von der Bandvorbereitung 2 gelangt das bis dato ebene Stahlband in einen Profilierbereich 3, in dem das Stahlband in an sich bekannter Weise mit Profilierrollen in eine gewünschte, insbesondere rohrförmige oder teilweise rohrförmige (im Querschnitt beispielsweise hutförmige (Fig. 2)), Form gebracht wird.

Vorteilhaft ist, wenn am Ende des Profilierteiles der Anlage bereits eine erste Richt- und Kalibriereinheit 22 angeordnet ist.

Um Sicken, Vertiefungen oder Einprägungen vorzunehmen, gelangt das profilierte Band anschließend in einen Bereich, in dem es mit fliegenden Prägepressen 4 mit den entsprechenden Sicken, Verprägungen oder Vertiefungen ausgebildet wird.

Anschließend erfolgt in einer Reinigungsstation 5 eine Vorreinigung.

Anschließend an die Reinigung erfolgt die erfindungsgemäße zweistufige Erwärmung in einer entsprechenden Erwärmungsstation 6, wobei anschließend das Band in einer Kühl- bzw. Abschreckeinrichtung 7 abgeschreckt und dabei auch teilweise gehärtet wird.

An die Kühleinrichtung 7 schließt sich im Fall von Figur 1 eine Einheit zur Nachkonditionierung 9 an, die in Form einer Anlage zum Schleuderradstrahlen oder Injektorstrahlen ausgeführt sein kann. Hierbei wird das Profil insbesondere von Anhaftungen durch den Hochtemperaturprozess befreit.

Anschließend folgt bei einer Anlage gemäß Figur 1 eine Zugeinrichtung 8 und Kalibriereinrichtung 22 an, mit der das Band unter Spannung gehalten wird, insbesondere wird in der Zugeinrichtung 8 das Band, welches durch die zweistufige Erwärmungseinrichtung 6 und die Kühleinrichtung 7 geführt wird, mit einer Vorspannung beaufschlagt und hierbei geringfügig gereckt.

Im Fall von Figur 11 schließen Zugeinrichtung 8 und Kalibriereinrichtung 22 direkt an die Kühleinheit 7 an.

Anschließend an die Zugeinrichtung 8 und Kalibriereinrichtung 22 folgt bei beiden Positionen der Nachkonditionierung in einem letzten Bearbeitungsschritt vor dem Sortieren 23 die Abläng- und Lochungsstation 10, wobei das Band insbesondere mit Hilfe von Lasern in die Bauteile abgelängt und die Bauteile gelocht werden.

Bei einer Profilieranlage 1 gemäß Figur 11 werden die einzelnen Bauteile nach dem Ablängen nachkonditioniert, wobei diese Nachkonditionierungsstation 9 wieder sowohl in Schleuderradstrahl- als auch Injektorstrahltechnologie ausgeführt sein kann. Sollte die Nachkonditionierung 9 nicht unmittelbar neben der Profilieranlage 1 stehen, sodass die Profile erst nach der Nachkonditionierung 9 sortiert und paketiert werden, kann dazu eine Einheit zum Vereinzeln der Profile 24 und zum nachfolgenden Bündeln 25 erforderlich sein.

Ein mit dem erfindungsgemäßen Verfahren erzeugtes Profilbauteil ist im Querschnitt beispielsweise hutförmig (Fig. 2) ausgebildet. Es kann jedoch auch deutlich komplexere Formen annehmen.

Dieses Band bzw. Profil 11 besitzt über den Querschnitt gesehen harte Bereiche 12 und weiche Bereiche 13 (Figur 2).

Diese Bereiche können auch über die Länge des Bauteils verteilt sein, so dass sich ein harter Bereich 12 beispielsweise nur über eine Teillänge des Bauteils erstreckt.

Hierzu sieht das Verfahren vor, das gesamte Bauteil beispielsweise induktiv in einer ersten Erwärmungsstufe auf eine Temperatur aufzuheizen, bei der der gewählte Stahlwerkstoff noch nicht in ein austenitisches Gefüge umgewandelt ist, so dass eine Aufheizung dieses in der ersten Stufe erwärmten Stahlwerkstoffes nicht zu einer martensitischen Härtung führt.

Die Erwärmung in der ersten Stufe findet dabei dementsprechend bei Temperaturen von etwa 650°C bis 720°C statt, insbesondere kann die Vorerwärmung auf Temperaturen < 680°C durchgeführt werden. In jedem Fall bleibt die Temperatur unter der Austenitstarttemperatur (Ac₁) Der verwendete Stahlwerkstoff ist bevorzugt ein Stahlwerkstoff bzw. ein Stahlband, welches mit einer Korrosionsschutzbeschichtung versehen ist.
Die Beschichtung ist z. B. eine Beschichtung aus Zink oder eine Zinklegierung, wobei diese Beschichtung aus Zink oder einer Zinklegierung bei den Temperaturen der ersten Stufe noch fest ist, d. h. diese Beschichtung aus Zink legiert sich bei diesen Temperaturen mit dem darunter liegenden Stahlwerkstoff zu Zink-Eisen-Verbindungen.

Bevorzugt wird jedoch bei der Erfindung ein Stahlwerkstoff bzw. ein Stahlband eingesetzt, welches bereits über eine Zink-Eisen-Legierungs-Beschichtung verfügt. Derartige Zink-Eisen-Legierungs-Beschichtungen werden auch als Galvannealing-Schichten bezeichnet und üblicherweise dadurch erzielt, dass das Stahlband nach dem Verzinken einer Temperaturbehandlung unterworfen wird. Bei einer Galvannealing-Beschichtung ist von Vorteil, dass diese bei dem erfindungsgemäßen Prozess die Temperaturbehandlung sehr gut verträgt und die Temperaturbehandlung auch bezüglich möglicher Wartezeiten und ähnlichem sehr robust und unempfindlich ist.

Das Verfahren sieht zudem vor, in der zweiten Erwärmungsstufe lediglich die Teile des Bandes 11, die gehärtet werden sollen (gehärtete Bereiche 12), gezielt weiter aufzuheizen, so dass diese Bereiche ein austenitisches Gefüge ausbilden. Werden diese austenitischen Bereiche anschließend zusammen mit den nicht austenitisierten Bereichen abgekühlt, erfolgt in den austenitischen Bereichen eine martensitische Härtung. Insbesondere wird das Profil teilbereichsweise auf Temperaturen von 720°C-920°C erhitzt.

Um diese Bereiche, die gehärtet werden sollen, aufzuheizen, sind unterschiedliche Vorgehensweisen nach der Erfindung möglich.

Werden die gewünschten Bauteile mit gehärteten Bereichen 12 versehen, welche über die gesamte Länge des Blechbandes 11 bzw. des Profils 11 reichen, können stationäre Erwärmungseinrichtungen 17 auf das Band 11 einwirken, während das Band 11 an den stationären Erwärmungseinrichtungen vorbeiläuft.

Werden lediglich Teillängen des Bandes 11 mit gehärteten Bereichen 12 ausgebildet, gibt es wiederum zwei Möglichkeiten, einerseits stationäre Erwärmungseinrichtungen 17, die in den Bereichen, die nicht gehärtet werden sollen, abgeschirmt oder abgeschaltet werden oder Erwärmungseinrichtungen, die mit gegebenenfalls differierender Geschwindigkeit mit dem Band 11 mitgeführt werden und anschließend zu ihrem Ausgangspunkt zurückgefahren werden (fliegende Erwärmungseinrichtungen 17).

Eine derart vorgenommene und inhomogene Erwärmung über den Querschnitt, gegebenenfalls auch über die Länge, eines Profils führt üblicherweise dazu, dass dieses Profil sich verzieht oder beult.

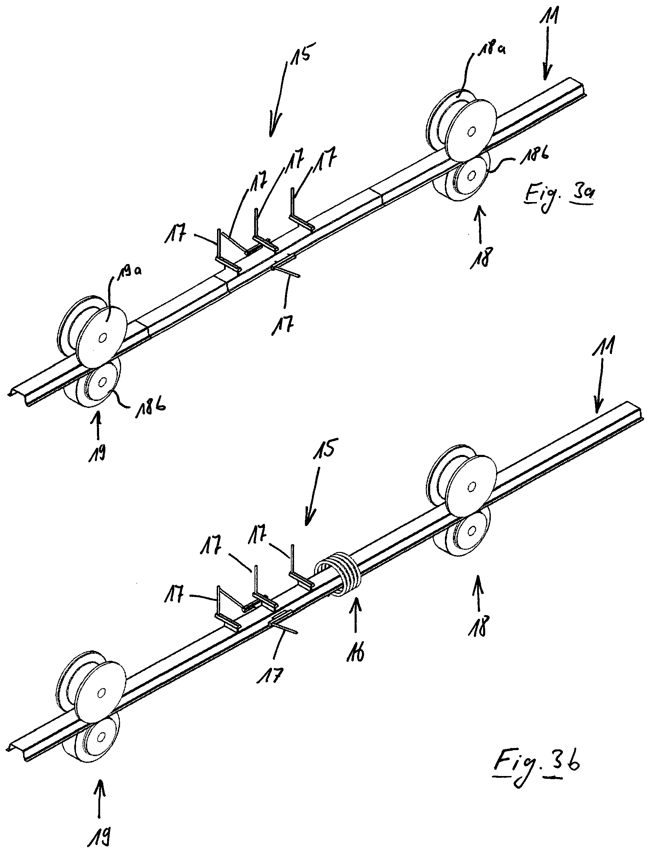

Erfindungsgemäß wird ein Profil 11 (Figur 3) in eine zweistufige Erwärmungseinrichtung 15 geführt, wobei die Erwärmungseinrichtung 15 z. B. einen Induktor 16 und Brenner 17 umfasst, welche auf das Profil 11 einwirken. Selbstverständlich ist es auch möglich, die Vorerwärmung lediglich mit Brennern 17 durchzuführen (Figur 3a).

In bevorzugter Ausführung werden als Brenner solche Brenner verwendet, die mit vorgemischtem Gas betrieben werden. Vorgemischtes Gas bedeutet, dass der eigentliche Brennstoff (z. B. Erdgas) und Luft oder Sauerstoff vorgemischt sind. Mit solchen Brennern, die mit vorgemischtem Gas arbeiten, lässt sich sehr genau eine kontrollierte Erwärmung bewerkstelligen. Die Temperaturführung ist bei diesen Brennern besonders einfach, wobei diese Brenner bei Bereichen unterschiedlicher Härte in Profillängsrichtung bevorzugt als fliegende Brenner eingesetzt werden, sodass sie nicht abgeschaltet werden müssen. Ein Abschalten dieser Brenner erfordert ein Nachspülen mit Pressluft, welches vermieden werden sollte. Dieses Nachspülen verursacht eine gewisse Mindestzeit zwischen Betriebsphasen der Brenner.

Das Profil 11 bzw. das Band 11 wird hierbei (Figur 3b) sowohl vor der Erwärmungseinrichtung 15 als auch nach der Erwärmungseinrichtung 15 mit je einem Paar Rollen 18, 19 geführt, wobei jedes Rollenpaar eine obere Rolle 18a, 19a und eine untere Rolle 18b, 19b umfasst. Die Rollen 18, 19 führen das Profil 11 vorzugsweise zumindest kraftschlüssig, gegebenenfalls auch form- und kraftschlüssig.

Durch die aufgebrachte Zugkraft und die eingeleitete Dehnung wird auch - insbesondere wenn diese Dehnung auch bei der Abschreckhärtung noch vorhanden ist - ein Verzug durch die Martensitumwandlung verhindert. Dadurch, dass das Stahlband in unterschiedlichen Phasen nach der Abkühlung vorliegt, martensitisch in den gehärteten Bereichen und eher ferritisch in den weicheren Bereichen, entstehen auch Unterschiede bei der jeweiligen Phasenumwandlung. Diese werden ebenfalls durch die aufgebrachte Dehnung ausgeglichen. Die aufgebrachte Dehnung ist hierbei deshalb von Vorteil, weil einerseits kein Verzug oder nur ein geringer Verzug erzeugt wird. Dieser geringe Verzug oder nicht vorhandene Verzug macht das sonst und auch üblicherweise notwendige Richten der Profile überflüssig. Dies ist besonders wichtig deshalb, weil ein nachfolgendes Richten die Bruchdehnung der Bauteile verschlechtert.

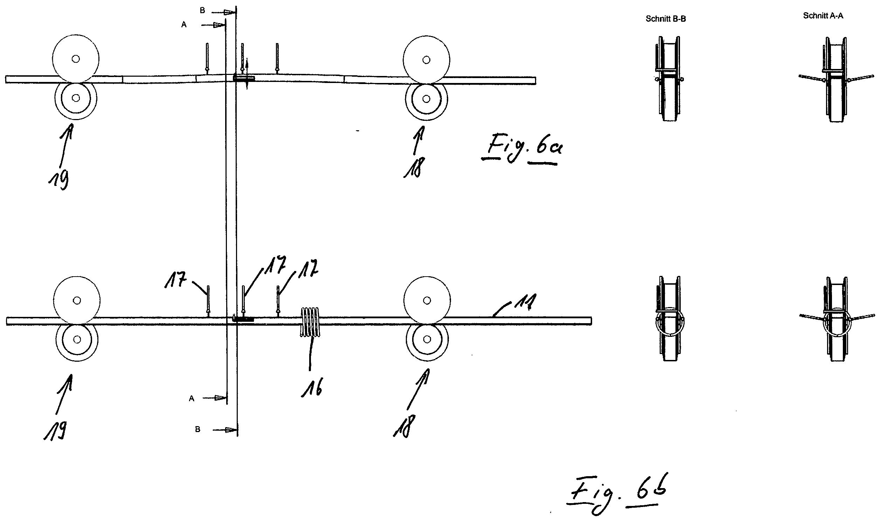

In Figur 6a ist die Erwärmung anhand nur von Brennern, ohne Vorwärmstufe und ohne den erfindungsgemäßen Bandzug gezeigt, was zu einer Beulung des Profils führt.

In Figur 6b ist mittels des Induktors 16 eine entsprechende Vorerwärmung durchgeführt worden, wobei durch den entsprechenden Bandzug, insbesondere die Zugeinrichtung 8, das Profil 11 eben verbleibt.

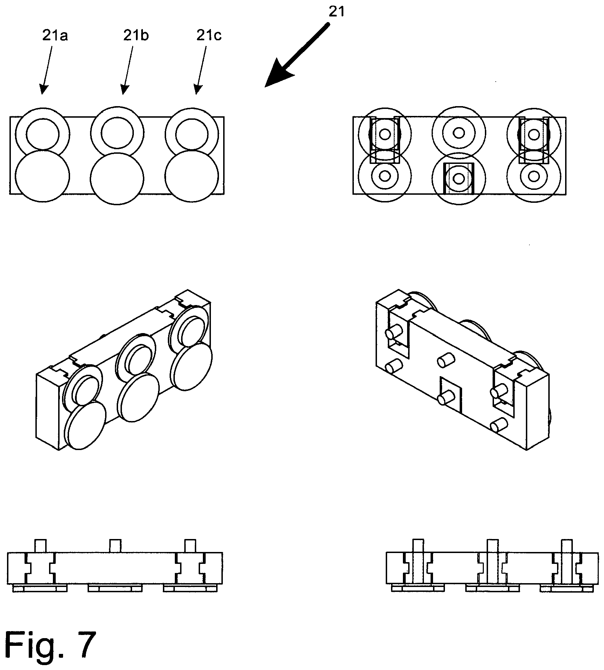

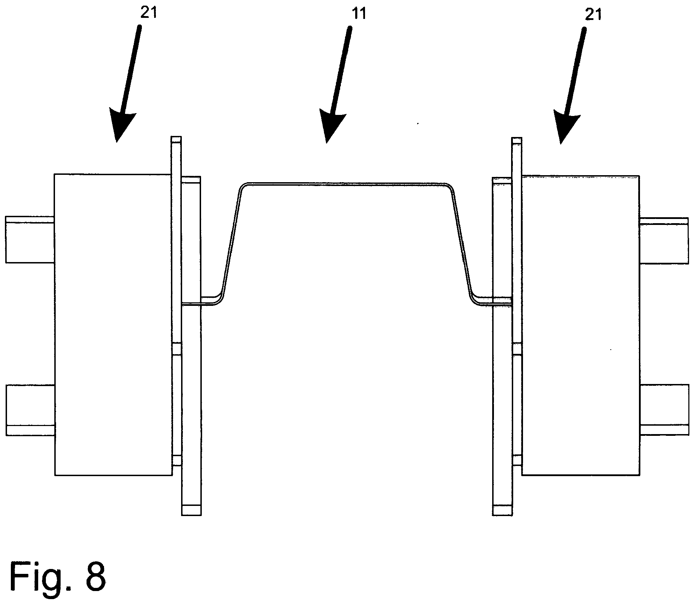

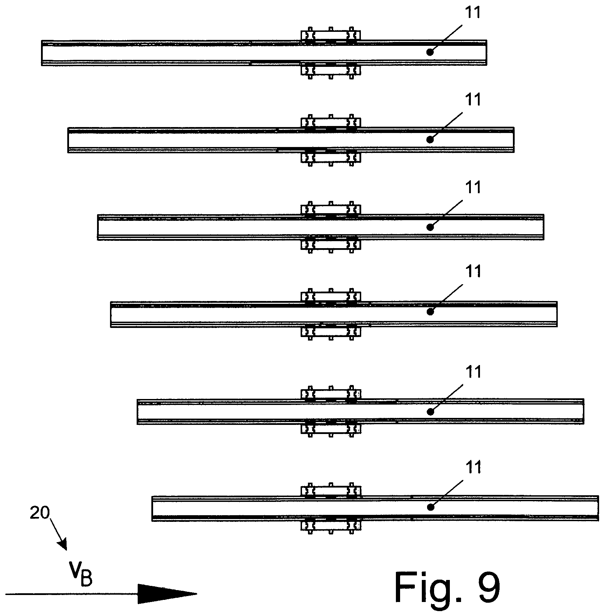

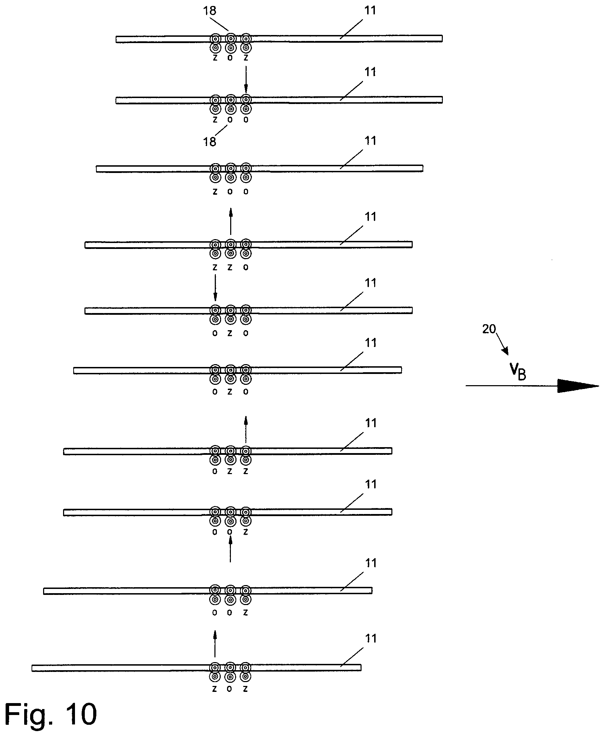

Bevorzugt (Figuren 7 bis 10) erfolgt die Führung des Profils 11 und die Ausübung des Bandzugs nur in den nicht gehärteten Bereichen, wobei im Fall von Verprägungen am Profil diese freigestellt werden müssen. Um das Profil in der Erwärmungszone dennoch ausreichend genau in Position zu halten sind hier angesteuerte Führungseinrichtungen 21, vorzugsweise aber nicht erforderlicher Weise angetrieben, vorzusehen, welche vorzugsweise über drei Rollenpaare 21a, 21b und 21c verfügen. Die Rollenpaare 21a, 21b und 21c können unabhängig voneinander am Band angestellt werden und wirken z. B. auf den Flansch eines Profils 11 (Figur 8), sodass diese seitlich an einem Profil 11 am Flansch angreifen (Figur 9) und ein entsprechendes Profil 11 entsprechend einer Bewegungsrichtung 20 führen.

Hierbei sind die Rollenpaare 21a, 21b 21c so ausgestaltet, dass sie abhängig von bestimmten verprägten Bereichen eines Profils 11 auf das Profil einwirken und es führen oder die jeweiligen Rollenpaare auseinandergezogen werden und einen Freiraum zwischen sich begrenzen, sodass dieses Rollenpaar das Profil zumindest nicht auf beiden Seiten des Bandes berührt.

Dies ist insbesondere wichtig, wenn verprägte Bereiche durch das Rollenpaar laufen, denn hier würde die Verprägung andernfalls wieder ausgewalzt werden. Läuft ein derartiges Profil mit einem verprägten Bereich dementsprechend durch eine Einrichtung 21, werden somit die Einrichtungen 21 mit ihren Rollenpaaren 21a, 21b, 21c sukzessive in eine Offenstellung und wieder in eine Geschlossenstellung bewegt, um ein Profil einerseits sicher zu führen und keine ungewollte Deformation zu verursachen.

Die zu erwärmenden Bereiche werden hierbei insbesondere auf 720-920°C erhitzt, wobei die entsprechenden Erwärmungseinrichtungen, wie bereits ausgeführt, auch fliegend ausgebildet sein können.

Bei einer induktiven Erwärmung des Bandes kommt es an Prägekanten und Schnitt- bzw. Stanzkanten durch die Induktion zu einer schnelleren, stärkeren Erwärmung als in den flächigen Bereichen des Bandes.

Um diese Bereiche vor einer Übererwärmung zu schützen, ist es erfindungsgemäß vorgesehen, bei Bedarf sogenannte Absorptionsmassen im Bereich der Stanz- oder Biegekanten zu verwenden, welche die Wärme dieser Bereiche aufnehmen und mit dem übrigen flächigen Band egalisieren.

Hierzu werden entsprechend geformte massive Massen mit dem Band durch die Anlage geführt und nach Verlassen der Erwärmeinrichtung vom Band abgenommen oder vom Band entfernt und gegebenenfalls gekühlt und zurückgeführt.

Bei einer Teilerwärmung mit Brennern zur Härtung werden diese in Bereichen, in denen der Brenner vorwiegend horizontal auf die zu härtenden Bereich des Bauteils bzw. des Profils 11 einwirkt mindestens einachsig geführt.

Bei der Erfindung ist von Vorteil, dass es gelingt, kontinuierlich rollgeformte Profile mit teilgehärteten Bereichen zu erzielen, wobei der kontinuierliche Prozess nicht durch Verzug oder Beulung negativ beeinflusst wird.

### Bezugszeichenliste:

- 1: Rollprofiliereinrichtung
- 2: Bandvorbereitung
- 3: Profilierbereich
- 4: Prägepressen
- 5: Reinigungsstation
- 6: Erwärmungsstation
- 7: Abschreckeinrichtung
- 8: Zugeinrichtung
- 9: Nachreinigungsstation
- 10: Abläng- und Lochungsstation
- 11: Bauteil/Profil(Band
- 12: harte Bereiche
- 13: weiche Bereiche
- 14:
- 15: Erwärmungseinrichtung
- 16: Induktor
- 17: Brenner
- 18: Einrichtung
- 18a: obere Rolle
- 18b: untere Rolle
- 18c: Rollenpaar
- 19a: obere Rolle
- 19b: untere Rolle
- 20: Bewegungsrichtung
- 21: Einrichtung
- 21a: Rollenpaar
- 21b: Rollenpaar
- 21c: Rollenpaar
- 22: Richt- und Kalibriereinheit

## Patentansprüche

1. Verfahren zum kontinuierlichen Rollformen und Härten von Stahlblech, wobei ein Stahlblechband (11) in einer Rollprofiliereinrichtung kontinuierlich zu einem Profil (11) rollumgeformt wird, **dadurch gekennzeichnet, dass** der rollumgeformte Profilstrang auf eine Temperatur unterhalb der Austenitstarttemperatur (Ac₁) vorerwärmt wird und der rollumgeformte Profilstrang (11) anschließend über Teilbereiche (12) seines Querschnitts über eine Teillänge oder die gesamte Länge auf eine Temperatur oberhalb AC₃ erwärmt wird, wobei der rollgeformte Profilstrang zumindest während der Erhitzung von Teilbereichen auf eine Temperatur > AC₃ mit einer axialen Zugspannung beaufschlagt wird.

2. Verfahren nach Anspruch 1, **dadurch gekennzeichnet, dass** der rollumgeformte Profilstrang (11) zumindest während der Erhitzung von Teilbereichen auf eine Temperatur > AC₃ in den Bereichen mit einer axialen Zugspannung beaufschlagt wird, die eine Temperatur unterhalb von AC₃ besitzen.

3. Verfahren nach Anspruch 1 oder 2, **dadurch gekennzeichnet, dass** die Zugspannung mit einer Zugeinrichtung (8) auf den Profilstrang (11) aufgebracht wird, wobei in Förderrichtung nachgeordnete Rollen (19) die Zugspannung aufbringen.

4. Verfahren nach einem der vorhergehenden Ansprüche, **dadurch gekennzeichnet, dass** eine Zugspannung aufgebracht wird, die zu einer 0,5- bis 2-prozentigen Dehnung in den nicht zu härtenden Bereichen führt.

5. Verfahren nach einem der vorhergehenden Ansprüche, **dadurch gekennzeichnet, dass** der Profilstrang nach der Erhitzung von Teilbereichen auf eine Temperatur > AC₃ mit einer über der kritischen Härtegeschwindigkeit liegenden Abkühlgeschwindigkeit abgekühlt wird, wodurch die Teilbereiche, die auf eine Temperatur > AC₃ erhitzt wurden, gehärtet werden.

6. Verfahren nach einem der vorhergehenden Ansprüche, **dadurch gekennzeichnet, dass** der Profilstrang vor dem Erhitzen mit fliegenden Prägeeinheiten mit Verprägungen ausgebildet wird.

7. Verfahren nach einem der vorhergehenden Ansprüche, **dadurch gekennzeichnet, dass** der Profilstrang (11) induktiv auf die Temperatur unterhalb der Austenitstarttemperatur (Ac₁) vorerwärmt wird.

8. Verfahren nach einem der vorhergehenden Ansprüche, **dadurch gekennzeichnet, dass** der rollumgeformte und vorgewärmte Profilstrang mittels Brennern (17) teilbereichsweise auf die Temperatur > AC₃ erhitzt wird.

9. Verfahren nach einem der vorhergehenden Ansprüche, **dadurch gekennzeichnet, dass** die Brenner (17) zum teilbereichsweisen Erhitzen des Profilstranges auf eine Temperatur oberhalb AC₃ stationär angeordnet sind oder mit dem Band mitlaufen (fliegend) auf das Band (11) einwirken.

10. Verfahren nach einem der vorhergehenden Ansprüche, **dadurch gekennzeichnet, dass** der Profilstrang (11) nach dem Härten abgelängt und/oder mit Löchern versehen wird.

11. Verfahren nach einem der vorhergehenden Ansprüche, **dadurch gekennzeichnet, dass** der rollumgeformte und gehärtete Profilstrang mittels Injektorstrahl oder Schleuderrad gereinigt wird.

12. Verfahren nach einem der vorhergehenden Ansprüche, **dadurch gekennzeichnet, dass** Lochkanten und/oder Prägekanten bei der Vorerwärmung und/oder der Austenitisierung mit Absorptionsmassen kontaktiert werden, um Übererwärmungen dieser Bereiche abzuführen.

13. Verfahren nach einem der vorhergehenden Ansprüche, **dadurch gekennzeichnet, dass** als Stahlband (11) ein Stahlband mit einer Korrosionsschutzschicht auf Basis von Zink oder eine galvannealed Korrosionsschutzschicht aus einer Zink-EisenLegierung verwendet wird.

14. Verfahren nach Anspruch 8, **dadurch gekennzeichnet, dass** als Brenner (17) Brenner mit vorgemischtem Gas verwendet werden.

15. Verfahren nach Anspruch 8 oder Anspruch 14, **dadurch gekennzeichnet, dass** die Brenner (17) als fliegende Brenner in Förderrichtung des Profilstrangs (11) beweglich ausgebildet sind und den Profilstrang in der Bewegung erwärmen, wobei die Brenner mit der Geschwindigkeit des Profilstrangs mitbewegt werden, den Profilstrang beim Erwärmen überholen oder dem Profilstrang beim Erwärmen nacheilen, sodass axiale Längen oder Teillängen des Profilstrangs erhitzt werden.

## Claims

1. A method of continuously roll forming and tempering steel sheet, wherein a steel sheet strip (11) is continuously roll formed into a profile (11) in a roll profiler, **characterized in that** the roll formed profile strand is preheated to a temperature below the austenite start temperature (Ac₁) and the roll formed profile strand (11) is then heated to a temperature above AC₃ over partial areas (12) of its cross-section and / or a portion of its length, wherein the roll-formed profile strand is at least during the heating of portions to a temperature > AC₃ subjected to an axial tensile stress.

2. A method according to claim 1, **characterized in that** the roll-formed profile strand (11) is at least during the heating of partial areas to a temperature > AC₃ subjected to an axial tensile stress in those areas, which have a temperature below AC₃.

3. A method according to claim 1 or 2, **characterized in that** the tension on the profile strand (11) is applied with a pulling device (8), wherein downstream rollers (19) apply the tension in the conveying direction.

4. A method according to one of the preceding claims, **characterized in that** a tensile stress is applied, which leads to a 0.5 to 2 percent elongation in the non-hardening areas.

5. A method according to one of the preceding claims, **characterized in that** the profile strand is cooled after heating of partial areas to a temperature > AC₃ with a cooling rate above the critical hardening speed, whereby the partial areas which have been heated to a temperature > AC₃ are cured.

6. A method according to one of the preceding claims, **characterized in that** the profile strand is formed before with stampings heating with flying embossing units.

7. A method according to one of the preceding claims, **characterized in that** the profile strand (11) is inductively preheated to the temperature below the austenite starting temperature (Ac₁).

8. A method according to one of the preceding claims, **characterized in that** the roll-formed and preheated profile strand by means of burners (17) is partially heated to the temperature > AC₃.

9. A method according to one of the preceding claims, **characterized in that** the burners (17) for partial heating of the profiled strand to a temperature above AC₃ are arranged stationary or run along with the tape (flying), act on the profile strand (11).

10. A method according to one of the preceding claims, **characterized in that** the profile strand (11) is cut to length after hardening and / or provided with holes.

11. A method according to one of the preceding claims, **characterized in that** the roll-formed and hardened profile strand is cleaned by means of injector jet or blast wheel.

12. A method according to one of the preceding claims, **characterized in that** hole edges and / or embossing edges are contacted during the preheating and / or austenitization with absorption masses to dissipate overheating of these areas.

13. A method according to one of the preceding claims, **characterized in that** a steel strip with a corrosion protection layer based on zinc or a galvannealed corrosion protection layer made of a zinc-iron alloy is used as the steel strip (11).

14. A method according to one of the preceding claims, **characterized in that** burners (16) with pre-mixed gas are used as burners (17).

15. A method according to one of the preceding claims, **characterized in that** the burners (17) are designed as flying burners in the conveying direction of the profile strand (11) and heat the profile strand in the movement, wherein the burners are moved with the speed of the profile strand, the profile strand overtake during heating or lag the profile strand during heating, so that axial lengths or partial lengths of the profile strand are heated.

## Revendications

1. Procédé pour le profilage à rouleaux en continu et le durcissement de tôle d'acier, dans lequel une bande de tôle d'acier (11) est profilé en continu en un brin profilé (11) dans un profileur à rouleaux, **caractérisé en ce que** le brin profilé formé à rouleaux est préchauffé à une température inférieure à la température de départ d'austénite (Ac₁) et que le brin profilé formé à rouleaux (11) est ensuite chauffé à une température supérieure à AC₃ sur des portions (12) de sa section transversale sur une partie de sa longueur ou sa longueur tôtale, le brin de profilé formé étant soumis à une contrainte de traction axiale au moins durant le chauffage à une température > AC₃ à une température supérieure à AC₃ sur des zones partielles.

2. Procédé selon la revendication 1, **caractérisé en ce que** le brin profilé formé à rouleaux (11), au moins durant le chauffage à une température > AC₃ de zones partielles à une température supérieure à AC₃ est soumis à une contrainte de traction axiale sur les zones, qui ont une température inférieure à AC₃.

3. Procédé selon la revendication 1 ou 2, **caractérisé en ce que** la contrainte de traction axiale est appliquée avec un dispositif de traction (8) sur le brin profilé formé à rouleaux (11), dans lequel des rouleaux en aval (19) appliquent la tension.

4. Procédé selon l'une des revendications précédentes, **caractérisé en ce qu'**une contrainte de traction est appliquée, ce qui conduit à un allongement de 0,5 à 2% dans les zones non à durcir.

5. Procédé selon l'une des revendications précédentes, **caractérisé en ce que** le brin profilé est refroidi après chauffage de zones partielles à une température > AC₃ avec une vitesse de refroidissement supérieure à la vitesse de durcissement critique, par ce quoi les zones partielles ayant été chauffées à une température > AC₃ sont durcies.

6. Procédé selon l'une des revendications précédentes, **caractérisé en ce que** le brin de profilé est formé avant le chauffage avec des emboutissages avec des unités de gaufrage volantes.

7. Procédé selon l'une quelconque des revendications précédentes, **caractérisé en ce que** le brin de profil (11) est préchauffé par induction à la température inférieure à la température de départ de l'austénite (Ac₁).

8. Procédé selon l'une quelconque des revendications précédentes, **caractérisé en ce que** le brin profilé formé et préchauffé au moyen de brûleurs (17) est chauffé à la température > AC₃ dans des zones partielles.

9. Procédé selon l'une quelconque des revendications précédentes, **caractérisé en ce que** les brûleurs (17) pour le chauffage en zones partielles du brin profilé à une température supérieure à AC₃ sont disposé fixe ou sont agencés ou coulissent (en volant) avec la bande (volant) agissent sur le brin (11).

10. Procédé selon l'une quelconque des revendications précédentes, **caractérisé en ce que** le brin profilé (11) est coupé et / ou pourvu de trous après durcissement.

11. Procédé selon l'une quelconque des revendications précédentes, **caractérisé en ce que** le brin profilé formé à rouleaux et durci est nettoyé au moyen d'un jet d'injecteur ou d'une roue de soufflage.

12. Procédé selon l'une quelconque des revendications précédentes, **caractérisé en ce que** des bords de trou et / ou des bords de gaufrage sont mis en contact pendant le préchauffage et / ou l'austénitisation avec des masses d'absorption pour dissiper la surchauffe de ces zones.

13. Procédé selon l'une quelconque des revendications précédentes, **caractérisé en ce qu'**on utilise comme bande d'acier (11) une bande d'acier avec une couche de protection contre la corrosion à base de zinc ou une couche de protection anticorrosion galvanisée en alliage de zinc et de fer.

14. Procédé selon l'une quelconque des revendications précédentes, **caractérisé en ce que** des brûleurs (16) à gaz prémélangé sont utilisés comme brûleurs (17).

15. Procédé selon l'une quelconque des revendications précédentes, **caractérisé en ce que** les brûleurs (17) sont conçus comme des brûleurs volants dans la direction de transport du brin profilé (11) et chauffent le brin profilé dans le mouvement, les brûleurs étant déplacés avec la vitesse du brin profilé, dépassent ou suivent le brin profilé lors du chauffage, de sorte que les longueurs axiales ou les longueurs partielles du profilé soient chauffées.
